(19) Europäisches Patentamt
European Patent Office
Office européen des brevets

(11) **EP 2 751 547 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **12745640.8**

(22) Anmeldetag: **31.07.2012**

(51) Int Cl.:
*G01N 21/3504* (2014.01)   *G01N 21/3577* (2014.01)
*G01N 21/3586* (2014.01)   *G01N 21/41* (2006.01)
*G01N 21/90* (2006.01)

(86) Internationale Anmeldenummer:
**PCT/EP2012/003401**

(87) Internationale Veröffentlichungsnummer:
**WO 2013/029746 (07.03.2013 Gazette 2013/10)**

(54) **VERFAHREN UND VORRICHTUNG ZUM BESTIMMEN EINER SUBSTANZ UNTER VERWENDUNG VON THZ-STRAHLUNG**

METHOD AND APPARATUS FOR THE DETERMINATION OF A SUBSTANCE USING THZ RADIATION

PROCÉDÉ ET DISPOSITIF POUR DÉTECTER UNE SUBSTANCE À L'AIDE DE RAYONNEMENT THZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2011 DE 102011112697**

(43) Veröffentlichungstag der Anmeldung:
**09.07.2014 Patentblatt 2014/28**

(73) Patentinhaber: **Fraunhofer Gesellschaft zur Förderung der angewandten Forschung E.V.**
**80686 München (DE)**

(72) Erfinder:
• **SARTORIUS, Bernd**
  **14052 Berlin (DE)**
• **ROEHLE, Helmut**
  **13629 Berlin (DE)**

(74) Vertreter: **Pfenning, Meinig & Partner mbB Patent- und Rechtsanwälte**
**Joachimsthaler Straße 10-12**
**10719 Berlin (DE)**

(56) Entgegenhaltungen:
**US-A- 5 864 395**

• **N. KRUMBHOLZ ET AL: "Handheld terahertz spectrometer for the detection of liquid explosives", PROCEEDINGS OF SPIE, 17. September 2009 (2009-09-17), Seiten 748504-748504-12, XP55041015, ISSN: 0277-786X, DOI: 10.1117/12.830381**
• **VON CHRZANOWSKI L S ET AL.: "Capability of Terahertz-Wave Instrumentation for Non Destructive Testing of Liquids", 10TH EUROPEAN CONFERENCE ON NON-DESTRUCTIVE TESTING, 7. Juni 2010 (2010-06-07), 11. Juni 2010 (2010-06-11), XP002685244, Moscow Gefunden im Internet: URL:http://www.ndt.net/article/ecndt2010/reports/1_05_16.pdf [gefunden am 2012-10-15]**
• **HUNSCHE S ET AL: "NEW DIMENSIONS IN T-RAY IMAGING", IEICE TRANSACTIONS ON ELECTRONICS, INSTITUTE OF ELECTRONICS, TOKYO, JP, vol. E81-C, no. 2, 1 February 1998 (1998-02-01), pages 269-275, XP000774572, ISSN: 0916-8524**
• **D.M Mittleman ET AL: "T-ray imaging", IEEE JOURNAL OF SELECTED TOPICS IN QUANTUM ELECTRONICS., vol. 2, no. 3, 1 September 1996 (1996-09-01), pages 679-692, XP055568297, US ISSN: 1077-260X, DOI: 10.1109/2944.571768**

## Beschreibung

Die Erfindung betrifft ein Verfahren zum Bestimmen einer Substanz unter Verwendung von THz-Strahlung sowie eine zur Durchführung eines solchen Verfahrens geeignete Anordnung.

Es sind bereits verschiedene Verfahren entwickelt worden, bei denen THz-Strahlung zum Messen von Eigenschaften einer Substanz in Richtung der Substanz ausgestrahlt wird und ein aus Richtung der Substanz kommender Anteil der THz-Strahlung detektiert wird. Ein solches Verfahren ist beispielsweise aus der Druckschrift DE 10 2009 051 692 B3 bekannt.

Mit den bekannten Verfahren dieser Art lassen sich Materialien analysieren, die für THz-Strahlung zumindest teilweise transparent sind. Ein mit dem Stand der Technik aus der DE 10 2009 051 692 B3 noch ungelöstes Problem ist jedoch, Flüssigkeiten - insbesondere wässrige Flüssigkeiten, die in aller Regel für THz-Strahlung opak sind - zu analysieren, die sich in einem verschlossenen Behälter befinden, der selbst aus einem zunächst nicht bekannten Material gefertigt ist. Dieses Problem kann sich z.B. im Zusammenhang mit Sicherheitskontrollen an Flughäfen stellen. Dabei sollen insbesondere gefährliche Flüssigkeiten von harmlosen Getränken unterschieden werden können, ohne dass dazu der die Flüssigkeit enthaltende Behälter - typischerweise eine Flasche oder dergleichen - geöffnet werden muss. Bekannte Mittel wie Schnüffel-Portale oder Röntgengeräte scheitern an diesem Problem. In dem Artikel "Handheld Terahertz Spectrometer for the Detection of Liquid Explosives" von L. Krumbholz et al., Proc. of SPIE, Vol. 7485, 748504 (2009) ist ein verhältnismäßig aufwändiger Algorithmus beschrieben, der eine Erkennung bestimmter Flüssigkeiten in geschlossenen Gefäßen auf Grundlage einer Messung daran reflektierter Terahertzstrahlung ermöglicht.

In dem Artikel "New Dimensions in T-Ray Imaging" von S. Hunsche et al., IEICE Transactions on Electronics, Vol. E81-C, No. 2, Seiten 269 ff. (Februar 2009) ist ein Verfahren beschrieben, bei dem ein Bild eines mit einem Flüssiggas gefüllter Behälters erzeugt wird, indem der Behälter einer THz-Strahlung ausgesetzt und die vom Behälter transmittierte THz-Strahlung detektiert wird, um eine ortsabhängige Absorption oder Verzögerung der THz-Strahlung zu bestimmen. Dadurch kann z.B. ein Füllstand der Behälters festgestellt werden. Der Artikel "T-Ray Imaging" von D. M. Mittleman et al., IEEE Journal of Selected Topics in Quantum Electronics, Vol. 2, No. 3, Seiten 679 ff. (September 1996) beschreibt ein ähnliches Verfahren, bei dem die von einer Probe reflektierte THz-Strahlung detektiert wird.

Der vorliegenden Erfindung liegt die Aufgabe zugrunde, eine in einem verschlossenen Behälter befindliche Flüssigkeit in vergleichsweise einfacher Weise zumindest so genau zu bestimmen, dass sie einer Klasse von Flüssigkeiten zugeordnet oder von einer bestimmten anderen Flüssigkeit oder Klasse von Flüssigkeiten unterschieden werden kann, und zwar so, dass der Behälter dazu nicht geöffnet werden muss.

Diese Aufgabe wird erfindungsgemäß gelöst durch ein Verfahren mit den Merkmalen des Anspruchs 1 sowie durch eine Anordnung mit den Merkmalen des Anspruchs 9, die sich zur Durchführung dieses Verfahrens eignet.

Bei dem vorgeschlagenen Verfahren ist die zu bestimmende Substanz also eine Flüssigkeit, die sich in einem verschlossenen Behälter befindet, der zusätzlich ein Gas enthält, wobei eine Wand des Behälters für THz-Strahlung durchlässig ist. Dabei werden zwei Messungen unter Verwendung von THz-Strahlung durchgeführt, wobei die THz-Strahlung jeweils zum Messen von Eigenschaften der Flüssigkeit in Richtung der Flüssigkeit ausgestrahlt wird und ein aus Richtung der Flüssigkeit kommender Anteil der THz-Strahlung detektiert wird. Dabei wird der detektierte Anteil der THz-Strahlung bei der ersten Messung an einer Grenzfläche zwischen der Wand und dem Gas oder einer das Gas enthaltenden Blase und bei der zweiten Messung an einer Grenzfläche zwischen der Wand und der Flüssigkeit reflektiert, wobei die erste Messung als Referenzmessung zum Bestimmen von Einflüssen der Wand und/oder des THz-Strahlengans auf ein Messergebnis der zweiten Messung dient.

Das Verfahren lässt sich einfach durchführen, indem die THz-Strahlung dazu bei der ersten Messung auf eine Stelle der Wand gerichtet wird, an der das Gas oder die das Gas enthaltende Blase die Wand berührt, während die THz-Strahlung bei der zweiten Messung auf eine Stelle der Wand gerichtet wird, an der die Flüssigkeit die Wand berührt. Dazu kann der Behälter z.B. bei der ersten Messung von oben im Bereich der Gasblase und bei der zweiten Messung von unten im mit Flüssigkeit gefüllten Bereich bestrahlt werden. Dabei ist es unerheblich, ob die hier als erste Messung bezeichnete Referenzmessung vor oder nach der zweiten Messung oder gleichzeitig mit dieser durchgeführt wird.

Als THz-Strahlung sei insbesondere elektromagnetische Strahlung mit Frequenzen von zwischen 0,05 THz und 10 THz bezeichnet. Typischerweise beträgt die Frequenz zwischen 0,05 THz und 2 THz.

Der Behälter mit der Flüssigkeit, beispielsweise eine Flasche, ist geschlossen und kann bei dem vorgeschlagenen Verfahren vorteilhafter Weise auch geschlossen bleiben.

Der Erfindung liegt die Einsicht zugrunde, dass eine Intensität des nach einer Reflexion an der Grenzfläche zwischen der Wand und der Flüssigkeit - also bei der zweiten Messung - detektierten Anteils der THz-Strahlung nicht nur von Eigenschaften der Flüssigkeit abhängt, sondern auch von Eigenschaften der Wand, insbesondere von einem Brechungsindex eines die Wand bildenden Materials. Weiterhin sind störende Einflüsse auf dem Weg der THz-Strahlung von einem verwendeten Terahertzsender zur reflektierenden Stelle und von dort zu einem verwendeten Terahertzempfänger zu berücksichtigen. Dies sind Intensitätsverluste z.B.

durch Absorption in der Wand des Behälters, durch rauhe Oberflächenstrukturen der Wand, durch aufgeklebte Etiketten oder Verschmutzungen. Der Brechungsindex der Flüssigkeit kann bestimmt werden, wenn die störenden Einflüsse elminierte werden und wenn sowohl der Reflexionsgrad - also ein Verhältnis von einer Intensität einfallender Strahlung und der Intensität der reflektierter Strahlung - an der Grenzfläche zwischen Wand und Flüssigkeit als auch der Brechungsindex des die Wand bildenden Materials bekannt sind. Bei Labormessungen können störende Einflüsse durch entsprechende Aufbauten minimiert werden, und ein Brechungsindex dabei eingesetzter Küvetten ist bekannt. Problematisch wird es, wenn trotz störender Einflüsse auf dem Weg der THz-Strahlung und bei unbekanntem Brechungsindex eines Wandmaterials des Behälters die darin befindliche Flüssigkeit bestimmt werden soll. Diese Problematik wird nun dadurch gelöst, dass zusätzlich die Referenzmessung durchgeführt wird.

Mit Hilfe der Referenzmessung können zunächst die störenden Effekte - also die Intensitätsverluste - im THz-Strahlengang sehr umfassend erfasst und ein diese berücksichtigender Referenzwert erzeugt werden. Außerdem kann man sich zunutze machen, dass der Reflexionsgrad bei der Reflexion an der Grenzfläche zwischen der Wand und dem Gas von einer Unbekannten weniger abhängt als bei der Reflexion an der Grenzfläche zwischen der Wand und der Flüssigkeit, weil man in sehr guter Näherung davon ausgehen kann, dass das Gas einen Brechungsindex von 1 hat. Dadurch können auch Angaben über den Brechungsindex des die Wand des Behälters bildenden Materials gewonnen und/oder ein Maß für Absorptionseigenschaften der Wand bestimmt werden. Auch wenn dieses Material vorher nicht bekannt ist, kann ein Brechungsindex der Flüssigkeit dann zumindest ungefähr ermittelt werden, indem also die zweite Messung in Abhängigkeit von einem Ergebnis der ersten Messung ausgewertet wird. So kann die Flüssigkeit wiederum bestimmt oder zumindest einer Klasse zugeordnet werden.

Um sicherzustellen, dass die Einflüsse des THz-Strahlengangs und der Wand bei beiden Messungen identisch sind, kann vorgesehen sein, dass die Stelle der Wand, auf die die THz-Strahlung bei der zweiten Messung gerichtet wird, mit der Stelle der Wand identisch ist, auf die die THz-Strahlung bei der ersten Messung gerichtet wird. Dazu kann der Behälter so bewegt werden, dass bei der ersten Messung das Gas oder die Blase und bei der zweiten Messung die Flüssigkeit an dieser Stelle die Wand berührt. Das kann geschehen, indem der Behälter relativ zu einem verwendeten Messsystem mit THz-Sender und THz-Empfänger fixiert und mit letzterem zusammen gedreht oder gekippt wird.

Die Messung bei absolut identischem THz-Strahlengang mit den unverändert gleichen störenden Verlusten an einem für beide Messungen identischen Messpunkt, verändert nur dessen Berührung mit dem Gas bzw. der Gasblase bei der einen und mit der Flüssigkeit bei der anderen Messung, stellt in vieler Hinsicht das beste Verfahren zu Realisierung von Referenzmessung und der Flüssigkeitsmessung dar.

Diese perfekte Referenzbildung funktioniert selbst dann, wenn der Behälter sich in einer weiteren Verpackung befindet, z.B. in einer Reisetasche oder einem Pappkarton, sofern die gesamte Anordnung zueinander fixiert bleibt und in ihrer Gesamtheit verkippt oder gedreht wird. Dann ändert sich in der Gesamtheit nur der Kontakt der inneren Oberfläche des Behälters zu entweder dem Gas oder der Flüssigkeit, und in der Differenzbildung oder Verhältnisbildung Referenz- zu Messsignal wird nur diese Änderung erfasst.

Nachteilig sind bei der beschriebenen Durchführung beider Messungen an der gleichen Stelle lediglich der Aufwand für die mechanische Fixierung und Bewegung und der durch die nötige Bewegung verlangsamte Messablauf.

Als Alternative, z.B. für sehr schnelle Messungen, ist es deshalb auch denkbar, statt einer Bewegung des Behälters zwischen den Messungen die zwei Messungen an verschiedenen Stellen der Wand vorzunehmen. Insbesondere in diesem Fall kann der Behälter für die erste und die zweite Messung liegend und/oder derart positioniert werden, dass sich das Gas in einem Bereich des Behälters sammelt, in dem ein vertikaler Querschnitt der Wand des Behälters kreisförmig ist und/oder eine konstante Wandstärke zeigt. So lässt sich vermeiden, dass ein Ergebnis des Verfahrens durch zu stark abweichende Einflüsse der Wand auf die beiden Messungen aufgrund unterschiedlicher Wandeigenschaften verfälscht wird.

Erfindungsgemäß wird eine bei der ersten Messung gemessene Strahlungsintensität als Referenzwert verwendet und der Brechungsindex der Flüssigkeit abhängig von einem Verhältnis von einer bei der zweiten Messung gemessenen Strahlungsintensität und diesem Referenzwert bestimmt. Außerdem kann mit der ersten Messung und/oder der zweiten Messung der Brechungsindex des die Wand bildenden Materials bestimmt werden, was typischerweise indirekt geschehen wird, wobei der Brechungsindex der Flüssigkeit dann bestimmt wird, indem ein Ergebnis der zweiten Messung in Abhängigkeit von dem so bestimmten Brechungsindex des die Wand bildenden Materials ausgewertet wird.

Dazu kann ein rechnerischer Zusammenhang zwischen der Leistung $P_e$ der an der Grenzfläche zwischen Wand und Flüssigkeit einfallenden Strahlung, der Leistung $P_r$ der dort reflektierten Strahlung, dem Brechungsindex $N_1$ des die Wand bildenden Materials und dem Brechungsindex $N_2$ der Flüssigkeit ausgewertet werden. Dieser Zusammenhang ergibt sich aus den Fresnelschen Formeln und nimmt z.B. für den Spezialfall eines verschwindenen Ein- und Ausfallwinkels und unter der realistischen Annahme gleicher magnetischer Permeabilität von Wand und Flüssigkeit die Form $P_r = P_e(|N_2 - N_1|/|N_2 + N_1|)^2$ an. Bei der Auswertung kann berücksichtigt werden, dass für die Leistung $P_r'$ der bei

der Referenzmessung an der Grenzfläche zwischen Wand und Gas reflektierten Strahlung unter den gleichen Annahmen mit großer Genauigkeit $P_r'=P_e(|1-N_1|/|1+N_1|)^2$ gilt und dass das Verhältnis $P_r/P_r'$ dem Verhältnis der bei den zwei Messungen detektierten Leistungen bzw. Intensitäten entspricht. Es kann nämlich angenommen werden, dass der Brechungsindex des Gases in dem Behälter zumindest annähernd den Wert 1 hat.

Hilfreich ist es, wenn bei der ersten Messung und/oder bei der zweiten Messung zusätzlich zu dem genannten Anteil ein an einer äußeren Oberfläche des Behälters reflektierter Strahlungsanteil detektiert wird und eine Laufzeitdifferenz und/oder ein Intensitätsunterschied zwischen dem an der jeweiligen Grenzfläche zwischen der Wand und dem Gas oder der Flüssigkeit reflektierten Anteil und dem an der äußeren Oberfläche reflektierten Strahlungsanteil bestimmt wird. Aus der Laufzeitdifferenz kann dann eine optische Dicke der Wand ermittelt und aus dem Intensitätsunterschied ein Maß für ein Absorptionsverhalten eines die Wand bildenden Materials, z.B. ein Absorptionskoeffizient, bestimmt werden. Damit kann bereits mit großer Sicherheit auf das Material der Wand geschlossen oder dieses Material zumindest einer Klasse zugeordnet werden, was auf den Brechungsindex des Wandmaterials zu schließen erlaubt. Dazu kann z.B. eine Datenbank ausgewertet oder eine gespeicherte Tabelle ausgelesen werden.

Es kann vorgesehen sein, dass die erste und/oder die zweite Messung jeweils mehrmals an verschiedenen Stellen der Wand und/oder bei verschiedenen Frequenzen der THz-Strahlung durchgeführt werden. Durch Ausführen beider Messungen an unterschiedlichen Stellen kann ein statistischer Fehler des Verfahrens verringert werden. Eine Durchführung mindestens einer der Messungen bei unterschiedlichen Frequenzen erleichtert zunächst die Bestimmung des Wandmaterials, indem eine Frequenzabhängigkeit der Absorption im Wandmaterial bestimmt wird, so dass auch der Brechungsindex der Flüssigkeit genauer bestimmt werden kann. Wenn auch die zweite Messung bei verschiedenen Frequenzen durchgeführt wird, erhält man wiederum Werte für den Brechungsindex der Flüssigkeit bei verschiedenen Frequenzen, womit die Flüssigkeit genauer bestimmt werden kann. Dabei kann mit den Messungen z.B. ein Frequenzbereich von 0,1 THz bis 0,5 THz oder 1 THz, besser noch von 0,05 THz bis 2 THz, abgetastet werden.

Vorteilhaft ist auch ein Verfahren, bei dem zunächst die zweite Messung an der mit Flüssigkeit bedeckten inneren Oberfläche der Wand vorgenommen wird, dann der Behälter gedreht oder gekippt wird, um die innere Oberfläche der Wand am fixen Messpunkt in den Bereich des Gases bzw. der Gasblase zu bringen und dann in einer definierten zeitlichen Abfolge eine Messserie durchzuführen. Die Geschwindigkeit der Benetzungsänderung kann dann z.B. durch eine Auswerteinheit der verwendeten Anordnung ermittelt werden.

Flüssigkeiten können sich bezüglich dieser Eigenschaft erheblich voneinander unterscheiden. Insbesondere Wasser zeigt signifikant andere Benetzungseigenschaften als die meisten anderen Flüssigkeiten. So kann also ein weiterer Parameter zur Erkennung der Flüssigkeit erschlossen werden.

Verbindet man die Auswertung der ersten und der zweiten Messung, die z.B. durch eine Differenz- oder Verhältnisbildung erfolgen kann, bei der weiter oben beschriebenen jeweils gleichen relativen Anordnung von Terahertzsender und Terahertzempfänger zum Behälter während dieser beiden Messungen mit einer Messung - also einer Durchführung sowohl der ersten als auch der zweiten Messung - an mehreren Orten und mit einer Bildgebung, dann kann die Existenz eines Behälters mit einer Flüssigkeit in einer Verpackung erkannt werden. Wenn die Änderung des Messsignals bei der Verdrehung oder Verkippung in diesem Fall wiederum, wie im vorherigen Absatz beschrieben, zeitaufgelöst untersucht wird, dann werden Flüssigkeiten mit langsamer Benetzungsänderung - insbesondere z.B. Wasser - sich von solchen mit schnellen Benetzungsänderungen unterscheiden lassen. Bei schnellen Bewegungen werden Flaschen mit - ungefährlichen - wasserhaltigen Getränken wegen der geringen Benetzungsänderung nur zu einer sehr kleinen Signaländerung zwischen der Referenz-Messung, bei der zwar an sich das Gas die Wand berührt, aber die Wand noch mit Flüssigkeitsfilm benetzt ist, und der eigentlichen Flüssigkeitsmessung führen. Bei anderen, potenziell gefährlichen Flüssigkeiten mit schneller Benetzungsänderung - z.B. Benzinwird dagegen auch bei schnellen Dreh- oder Kippbewegungen eine deutliche Änderung des Signals festzustellen sein. Am unterschiedlichen Verhalten des Differenzsignals bei schnellen Dreh- oder Kippbewegungen kann man also ungefährliches Wasser und wasserhaltige Getränke von potenziell gefährlichem Benzin und verwandten Flüssigkeiten unterscheiden, und zwar auch in verschlossen Behältern die ihrerseits verpackt sind und sich beispielsweise in Reisetaschen oder Pappkartons befinden.

Um eine Bestimmung der optischen Dicke der Wand zu ermöglichen, kann das Verfahren mit einem phasenempfindlichen THz-System mit mindestens einer optisch aktivierbaren THz-Sendeantenne und mindestens einer optisch aktivierbaren THz-Empfängerantenne zur kohärenten Detektion der mit der THz-Sendeantenne erzeugten THz-Strahlung durchgeführt werden, bei dem die THz-Sendeantenne und die THz-Empfängerantenne durch eine gemeinsame Lichtquelle aktiviert werden. Bei der Lichtquelle kann es sich dabei z.B. um einen Pulslaser zur Erzeugung von Pulsen mit Frequenzanteilen im THz-Bereich oder um eine kontinuierliche Laserlichtquelle handeln, die ein optisches Schwebungssignal im THz-Bereich erzeugt. Ein geeignetes THz-System dieser Art ist z.B. in der Druckschrift WO 01/06915 A1 beschrieben.

Dabei ist es möglich, für die erste und die zweite Messung dieselbe THz-Sendeantenne und THz-Empfängerantenne zu verwenden oder für jede der beiden Messungen jeweils eine eigene THz-Sendeantenne und THz-Empfängerantenne vorzusehen. In jedem Fall ist es vorteilhaft, wenn nicht nur eine Amplitude oder Intensität des jeweiligen reflektierten Anteils der THz-Strahlung gemessen wird, sondern auch eine Phase, was mit THz-Systemen der beschriebenen Art möglich ist. So kann jeweils der komplexe Brechungsindex ermittelt werden.

Vorgeschlagen wird auch eine zum Durchführen des beschriebenen Verfahrens geeignete Anordnung zum Bestimmen einer in einem geschlossenen Behälter befindlichen Flüssigkeit. Diese Anordnung umfasst mindestens einen Terahertzsender zum Erzeugen von THz-Strahlung, mindestens einen Terahertzempfänger zum Detektieren der THz-Strahlung sowie eine mit dem mindestens einen Terahertzempfänger verbundene Auswerteeinheit zum Auswerten von Ausgangssignalen des Terahertzempfängers, wobei der Terahertzsender und der Terahertzempfänger relativ zueinander so angeordnet sind, dass der Terahertzempfänger geeignet ist, die mit dem Terahertzsender erzeugte THz-Strahlung nach einer Reflexion an einer definierten Stelle einer inneren Oberfläche einer Wand des Behälters zu detektieren. Die Auswerteeinheit der vorgeschlagenen Anordnung ist programmtechnisch eingerichtet, die Ausgangssignale für eine erste Messung und eine zweite Messung auszuwerten und dabei

- aus den Ausgangssignalen für die erste Messung einen Referenzwert für eine Intensität der detektierten THz-Strahlung abzuleiten und

- die Ausgangssignale für die zweite Messung in Abhängigkeit von dem Referenzwert auszuwerten und dadurch einen Brechungsindex der in dem Behälter befindlichen Flüssigkeit abzuleiten und/oder die Flüssigkeit einer Flüssigkeits-Klasse zuzuordnen.

Dabei liegt der programmtechnischen Einrichtung der Auswerteeinheit die Annahme zugrunde, dass die THz-Strahlung bei der ersten Messung an einer Stelle reflektiert wird, an der ein zusätzlich zu der Flüssigkeit in dem Behälter enthaltenes Gas oder eine Gasblase die Wand des Behälters berührt, und bei der zweiten Messung an einer Stelle reflektiert wird, an der die Flüssigkeit die Wand des Behälters berührt, was einer bestimmungsgemäßen Verwendung der Anordnung entspricht.

Die Auswerteeinheit kann außerdem dazu eingerichtet sein, aus den Ausgangssignalen jeweils eine Intensität eines an einer äußeren Oberfläche der Wand des Behälters reflektierten Anteils und eine Intensität eines an der inneren Oberfläche der Wand des Behälters reflektierten Anteils der THz-Strahlung sowie eine Laufzeitdifferenz zwischen diesen beiden Anteilen abzuleiten. Um das zu ermöglichen, sollte der Terahertzempfänger mit dem Terahertzsender synchronisiert sein. Das lässt sich problemlos realisieren, wenn der Terahertzsender eine optisch aktivierbare THz-Sendeantenne aufweist und der Terahertzempfänger eine optisch aktivierbare THz-Empfängerantenne zur kohärenten Detektion der mit der THz-Sendeantenne erzeugten THz-Strahlung aufweist und wenn eine gemeinsame Lichtquelle zum Aktivieren sowohl der THz-Sendeantenne als auch der THz-Empfängerantenne vorgesehen ist.

Dann kann die Auswerteeinheit auch eingerichtet sein,

- aus der Laufzeitdifferenz eine optische Dicke der Wand des Behälters abzuleiten,

- aus den genannten Intensitäten in Abhängigkeit von der optischen Dicke ein Maß für ein Absorptionsverhalten des Wandmaterials abzuleiten,

- das Wandmaterial in Abhängigkeit von diesem Maß und eventuell zusätzlich abhängig von der ermittelten Dicke als einem bestimmten Stoff entsprechend oder einer bestimmten Stoffklasse zugehörig zu identifizieren, z.B. durch Vergleich mit typischen Werten oder Schwellwerten, die z.B. in einer Datenbank gespeichert oder in der Auswerteeinheit hinterlegt sein können,

- und den Brechungsindex des Wandmaterials zu bestimmen als einem Wert entsprechend, der für diesen Stoff oder diese Stoffklasse in einem Speicher hinterlegt ist, der wiederum in Auswerteeinheit enthalten oder durch eine externe Datenbank gegeben sein kann.

Die Auswerteeinheit kann dann außerdem eingerichtet sein, den Brechungsindex der Flüssigkeit durch Auswerten eines Ergebnisses der zweiten Messung in Abhängigkeit von dem so bestimmten Brechungsindex des Wandmaterials zu bestimmen.

Das funktioniert am besten, wenn eine Frequenzabhängigkeit des Absorptionsverhaltens des Wandmaterials ermittelt wird, wenn das genannte Maß also für verschiedene Frequenzen bestimmt wird. Dazu kann die Auswerteeinheit eine Vorrichtung zum Ansteuern des Terahertzsenders aufweisen, die eingerichtet ist, den Terahertzsender so anzusteuern, dass er die THz-Strahlung sukzessive oder gleichzeitig mit verschiedenen Frequenzen erzeugt, wobei die Auswerteeinheit eingerichtet ist, durch Auswertung der Ausgangssignale bei der jeweiligen Frequenz zumindest eine der beiden Messungen für jede dieser Frequenzen durchzuführen.

Es kann vorgesehen sein, dass die Anordnung auch eine Haltevorrichtung für den Behälter, den Terahertzsender und den Terahertzempfänger aufweist, durch den der Behälter, der Terahertzsender und der Terahertzempfänger während der Messungen relativ zueinander fixiert werden, wobei die Gesamtheit mittels der Haltevorrichtung aber so drehbar oder kippbar ausgeführt ist, dass der von der THz-Strahlung bestrahlte Messpunkt einmal von der Gasblase und einmal von der Flüssigkeit bedeckt ist. Damit können Referenz- und Flüssigkeitsmessung an einer einzigen Stelle der Wand durchgeführt werden, und auch die störenden Verluste im THz-Strahlengang sind identisch und werden bei der Referenzmessung voll erfasst und bei der Auswertung kompensiert.

Es ist aber auch möglich, dass die Anordnung zwei Paare von jeweils einem Terahertzsender und einem Terahertzempfänger aufweist, von denen eines höher angeordnet ist als das andere, wobei das höher angeordnete Paar für die erste Messung an der Gasblase und das andere, also das untere Paar für die zweite Messung an der Flüssigkeit vorgesehen ist.

Zusätzlich kann die Anordnung eine Fördervorrichtung aufweisen, um den Behälter für die zwei Messungen automatische an einen Messort zu befördern und/oder am Messort zu drehen oder zu schwenken, beispielsweise ein Förderband oder eine verfahrbare, drehbare oder schwenkbare Halterung für den Behälter.

Schließlich kann es vorgesehen sein, dass der Terahertzsender und der Terahertzempfänger jeweils eine THz-Optik aufweist, um die erzeugte THz-Strahlung auf die jeweilige Stelle der Wand und die dort reflektierte THz-Strahlung auf die THz-Empfängerantenne zu fokussieren oder abzubilden.

Ausführungsbeispiele der Erfindung werden nachfolgend anhand der Figuren 1 bis 3 erläutert. Es zeigen

Figur 1      einen Querschnitt durch eine Anordnung zum Bestimmen einer in einer Flasche befindlichen Flüssigkeit unter Verwendung von THz-Strahlung,

Figur 2      Querschnitte durch eine dem gleichen Zweck dienenden Anordnung in einer anderen Ausführung in zwei verschiedenen Zuständen und

Figur 3      wieder in zwei verschiedenen Zuständen jeweils einen Längsschnitt durch eine entsprechende Anordnung in einer dem Ausführungsbeispiel aus Figur 2 ähnlichen Ausführung.

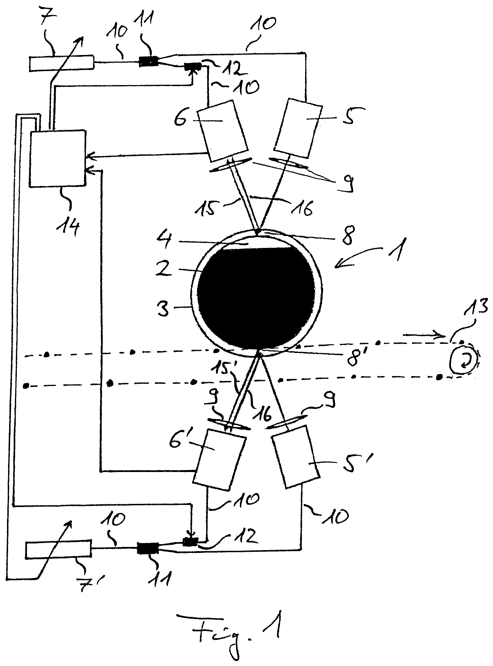

In Figur 1 ist ein im Querschnitt dargestellter Behälter 1 zu erkennen, bei dem es sich um eine verschlossene Flasche handelt und in dem sich eine Flüssigkeit 2 befindet. Bei der Flüssigkeit 2 handelt es sich im um eine zunächst unbekannte Flüssigkeit. Außerdem sei a priori nicht bekannt, aus was für einem Material eine Wand 3 des Behälters 1 gebildet ist, die jedoch zumindest teilweise für THz-Strahlung durchlässig ist. Zusätzlich zu der Flüssigkeit 2 befindet sich in dem Behälter 1 ein Gas, das eine Gasblase in einem oberen Teil des Behälters 1 bildet.

Dargestellt ist in Figur 1 auch eine Anordnung zum Bestimmen der in dem Behälter 1 befindlichen Flüssigkeit 2. Diese Anordnung weist zwei Terahertzsender 5 und 5' mit jeweils einer optisch aktivierbaren THz-Sendeantenne sowie für jeden der Terahertzsender 5 und 5' jeweils einen diesem Terahertzsender 5 bzw. 5' zugeordneten Terahertzempfänger 6 bzw. 6'. Die Terahertzempfänger 6 und 6' weisen jeweils eine optisch aktivierbare THz-Empfängerantenne auf.

Der Terahertzsender 5 und dem Terahertzempfänger 6 bilden ein Paar, dem eine gemeinsame Lichtquelle 7 zum Aktivieren sowohl der THz-Sendeantenne des Terahertzsenders 5 als auch der THz-Empfängerantenne des Terahertzempfängers 6 zugeordnet ist. In gleicher Weise ist dem Terahertzsender 5' und dem Terahertzempfänger 6' eine gemeinsame Lichtquelle 7' zugeordnet, mit dem sowohl die THz-Sendeantenne des Terahertzsenders 5 als auch die THz-Empfängerantenne des Terahertzempfängers 6 aktiviert werden.

Der Terahertzsender 5 und der Terahertzempfänger 6 sind relativ zueinander und zum Behälter 1 so angeordnet, dass eine mit dem Terahertzsender 5 erzeugte THz-Strahlung nach einer Reflexion an einer definierten Stelle 8 der Wand in einem oberen Bereich des Behälters mit dem Terahertzempfänger 6 detektiert werden kann. In ähnlicher Weise sind der Terahertzsender 5' und der Terahertzempfänger 6' relativ zueinander und zum Behälter 1 so angeordnet, dass eine mit dem Terahertzsender 5' erzeugte THz-Strahlung nach einer Reflexion an einer definierten Stelle 8' der Wand in einem unteren Bereich des Behälters 1 mit dem Terahertzempfänger 6' detektiert werden kann. Dazu weisen die Terahertzsender 5 und 5' sowie die Terahertzempfänger 6 und 6' jeweils eine THz-Optik 9 auf.

Bei den Lichtquellen 7 und 7' handelt es sich jeweils um einen Pulslaser, dessen Lichtpulse im fs-Bereich auf lichtempfindliche Elemente der jeweiligen THz-Sendeantenne und der jeweiligen THz-Empfängerantenne eingestrahlt werden. Durch relative Verzögerung der Pulse auf ihrem Weg zur Sendeantenne bzw. Empfängerantenne wird der empfangene THz-Puls abgetastet und durch nachfolgende Fourier-Transformation in ein THz-Spektrum, beispielsweise über einen Bereich von 0,05 THz bis 2 THz, umgesetzt.

Über Wellenleiter 10 und jeweils einen Strahlteiler 11 sind die Lichtquellen 7 mit dem jeweiligen Terahertzsender 5 bzw. 5' und dem jeweiligen Terahertzempfänger 6 bzw. 6' verbunden. Zwischen den Strahlteilern 11 und dem jeweiligen Terahertzempfänger 6 bzw. 6' ist außerdem jeweils eine verstellbare optische Verzögerungsschaltung 12 geschaltet. So bilden die Laserlichtquelle 7 mit dem Terahertzsender 5 und dem Terahertzempfänger 6 sowie die Laserlichtquelle 7' mit dem Terahertzsender 5' und dem Terahertzempfänger 6' jeweils ein phasenempfindliches THz-System, das eine kohärente Detektion der mit der jeweiligen THz-Sendeantenne erzeugten THz-Strahlung erlaubt. So kann nicht nur eine Intensität oder Leistung, sondern auch eine Phase oder Laufzeit der detektierten THz-Strahlung bestimmt werden.

Es ist auch möglich, dass die Lichtquellen 7 und 7' nicht als Pulslaser, sondern als kontinuierliche Laserlichtquellen ausgeführt sind, die zwei miteinander überlagerte Lichtkomponenten geringfügig unterschiedlicher Wellenlänge erzeugen, so dass sich ein Schwebungssignal im THz-Bereich ergibt, mit dem die THz-Antennen aktiviert werden. Solche Lichtquellten werden auch als CW-Quellen bezeichnet, wobei CW für continuous wave steht. Durch Verstimmen jeweils mindestens einer der Wellenlängen kann dabei wieder die Frequenz der letztlich erzeugten THz-Strahlung über ein gewünschtes Intervall verstellt werden, beispielsweise von 0,05 THz bis 2 THz.

Schematisch dargestellt ist in Figur 1 auch ein Förderband 13, mit dem der Behälter 1 automatisch an einen Messort - hier zwischen den beiden THz-Systemen - transportiert und dort gehalten werden kann. Mit dem Förderband 13 könnte der Behälter auch während des Verfahrens so am Mess-Strahl vorbeigeführt werden, dass mehrere Messpunkte entlang der Flasche untersucht werden können. So kann über Inhomogenitäten gemittelt werden, was die Auswertegenauigkeit erhöht.

Schließlich weist die Anordnung aus Figur 1 eine Auswerteeinheit 14 auf. Die Auswerteeinheit 14 ist programmtechnisch eingerichtet, Ausgangssignale der Terahertzempfänger 6 und 6' auszuwerten, und zwar für eine erste Messung, bei der ein an einer Grenzfläche zwischen der Wand 3 und dem Gas 4 reflektierter Anteil 15 der THz-Strahlung detektiert wird, und für eine zweite Messung, bei der ein an einer Grenzfläche zwischen der Wand 3 und der Flüssigkeit 2 reflektierter Anteil 15' der THz-Strahlung detektiert wird. Die erste Messung dient dabei als Referenzmessung, mit der störende Einflüsse im THz-Strahlengang - d.h. Intensitätsverluste - berücksichtigt und Einflüsse der Wand 3 auf ein Messergebnis der zweiten Messung bestimmt werden. Bei beiden Messungen wird außerdem ein an einer äußeren Oberfläche des Behälters 1 reflektierter Strahlungsanteil 16 detektiert. Im vorliegenden Fall wird für die erste Messung das THz-System mit dem Terahertzsender 5 und dem Terahertzempfänger 6 verwendet und für die zweite Messung das THz-System mit dem Terahertzsender 5' und dem Terahertzempfänger 6'.

Die Auswerteeinheit 14 enthält eine Vorrichtung zum Ansteuern der Lichtquellen 7 und 7' und damit der Terahertzssender 5 und 5'. Mit dieser Vorrichtung wird die Zeitlage der Pulse bzw. der Schwebungssignale der Lichtquellen 7 und 7' so verstellt, dass die empfangene THz-Strahlung zeitlich abgetastet und kohärent detektiert wird. Weiterhin erfolgt beim Schwebungssignals eine Frequenzabstimmung durch Wellenlängenabstimmung der Laser. So können die Messungen z.B. über den ganzen Frequenzbereich von 0,1 THz bis 1 THz oder von 0,05 THz bis 2 THz durchgeführt werden.

Die Auswerteeinheit 14 ist so programmiert, dass aus den Ausgangssignalen jeweils eine Intensität des an der äußeren Oberfläche der Wand 3 reflektierten Strahlungsanteils 16, eine Intensität des an der Grenzfläche zwischen der Wand 3 und dem Gas 4 bzw. der Flüssigkeit 2 - also an der inneren Oberfläche der Wand 3 - reflektierten Anteils 15 bzw. 15' der THz-Strahlung und eine Laufzeitdifferenz zwischen diesen beiden Strahlungsanteilen 16 und 15 bzw. 16 und 15' abgeleitet werden. Dabei wird zur Bestimmung der Laufzeitdifferenz jeweils die dazu durch die Auswerteeinheit 14 angesteuerte optische Verzögerungsschaltungen 12 bei den Messungen verstellt und eine Abhängigkeit des Ausgangssignals von einer Einstellung der Verzögerungsschaltung 12 untersucht. Die reflektierte THz-Strahlung wird dabei auch in ihrer Phase erfasst.

Aus der Laufzeitdifferenz, die bei beiden Messungen gleich sein wird, wird mittels der Auswerteeinheit 14 unmittelbar eine optische Dicke der Wand 3 abgeleitet. Indem ein Unterschied zwischen der für den Strahlungsanteil 16 ermittelten Intensität und der für den Anteil 15 ermittelten Intensität für die verschiedenen Frequenzen der THz-Strahlung unter Verwendung der optischen Dicke ausgewertet wird, ermittelt die Auswerteeinheit 14 einen Spektralverlauf eines Absorptionsverhaltens des die Wand 3 bildenden Materials. Der so ermittelte Spektralverlauf, der für jede der Frequenzen ein Maß für das Absorptionsverhalten bei dieser Frequenz definiert und beispielsweise den Absorptionskoeffizienten als Funktion der Frequenz ausdrücken kann, wird nun mit typischen Spektralverläufen oder mit Schwellwerten für die verschiedenen Frequenzen verglichen wird. Dadurch wird das Material der Wand 3 mit der Auswerteeinheit 14 zumindest als einer bestimmten Stoffklasse zugehörig identifiziert. Die typischen Spektralverläufe oder Schwellwerte sind dazu in einem Speicher in der Auswerteeinheit 14 hinterlegt. Für jeden infrage kommenden Stoff oder jede infrage kommende Stoffklasse ist in dem Speicher der Auswerteeinheit ein Brechungsindex als Funktion der Frequenz hinterlegt, so dass gleichzeitig durch die Auswerteeinheit 14 für jede der bei den Messungen verwendeten Frequenzen ein Brechungsindex des Materials der Wand bestimmt wird.

Die Auswerteeinheit 14 ist außerdem dazu eingerichtet, durch die Auswertung der bei der ersten Messung erhaltenen Ausgangssignale des Terahertzempfängers 6 einen Referenzwert für die Intensität der detektierten THz-Strahlung zu bestimmen, der bei der Auswertung der zweiten Messung verwendet wird. Die bei der zweiten Messung erhaltenen Ausgangssignale des Terahertzempfängers 6' werden also für jede der verwendeten Frequenzen jeweils in Abhängigkeit von dem für das Material der Wand 3 bestimmten Brechungsindex und dem Referenzwert ausgewertet. Der Referenzwert kann z.B. als errechnetes 100%-Signal definiert werden, entsprechend einem Intensitätswert, der sich bei einer 100%-igen Reflexion an der Grenzfläche ergäbe, entsprechend einem Reflexionsgrad von 1.

Dadurch wird schließlich für jede der verwendeten Frequenzen ein Brechungsindex der in dem Behälter 1 befindlichen Flüssigkeit 2 abgeleitet, und zwar abhängig von einem Verhältnis von der bei der zweiten Messung gemessenen Intensität des Anteils 15' und dem Referenzwert, wobei beide durch die jeweils für den Strahlungsanteil 16 ermittelte Intensität normiert werden können. Bei Vernachlässigung des sehr kleinen Einfallswinkels und Ausfallwinkels kann zum Bestimmen des Brechungsindexes der Flüssigkeit 2 bei einer bestimmten Frequenz die Gleichung

$$I'/I=[(|N_2-N_1|\times|1+N_1|)/(|N_2+N_1|\times|1-N_1|)]^2$$

nach $N_2$ aufgelöst werden. In dieser Gleichung bezeichne I die bei der ersten Messung für den Anteil 15 gemessene Intensität und I' die bei der zweiten Messung für den Anteil 15' gemessene Intensität - vorzugsweise jeweils normiert durch die für den Strahlungsanteil 16 gemessene Intensität - sowie $N_1$ den Brechungsindex des Materials der Wand 3, der in zuvor beschriebener Weise zumindest annähernd bestimmt werden kann, und $N_2$ den letztlich zu bestimmenden Brechungsindex der Flüssigkeit 2. Dieser Zusammenhang ergibt sich unmittelbar aus den Ausführungen zu den Fresnelschen Formeln im allgemeinen Beschreibungteil.

Spätestens wenn der Brechungsindex der Flüssigkeit 2 so für hinreichend viele verschiedene Frequenzen aus dem THz-Bereich bestimmt ist, kann daraus leicht auf die Flüssigkeit 2 selbst geschlossen oder die Flüssigkeit 2 zumindest als einer Klasse gefährlicher oder ungefährlicher Stoffe zugehörig identifiziert werden. Diese Identifizierung kann die Auswerteeinheit 14 durch eine entsprechende Programmierung selbsttätig durchführen.

Bei der hier beschriebenen, mit der Anordnung aus Figur 1 durchgeführten Verfahren zum Bestimmen der Flüssigkeit 2 ist der Behälter 1, der während aller Messungen geschlossen bleibt, liegend angeordnet und mithin so positioniert, dass sich das Gas 4 in einem Bereich des Behälters 4 sammelt, in dem ein in Figur 1 erkennbarer vertikaler Querschnitt der Wand 3 kreisförmig ist und eine konstante Wandstärke zeigt. So ist sichergestellt, dass die Eigenschaften der Wand 3 an der Stelle 8, an der die Referenzmessung durchgeführt wird, mit ihren Eigenschaften an der Stelle 8 vergleichbar sind, an der die zweite Messung vorgenommen wird. Die zwei Messungen können dabei im vorliegenden Ausführungsbeispiel gleichzeitig vorgenommen werden. Auch wenn der Behälter 1 anders geformt ist, sollten die Stellen 8 und 8' so gewählt werden, dass sie in Wandstärke, Oberflächenbeschaffenheit und Krümmungscharakteristik weitestgehend äquivalent sind.

Noch genauer wird das Verfahren, wenn die zwei Messungen stattdessen nacheinander durchgeführt werden und der Behälter 2 zwischen den beiden Messungen so bewegt wird, dass die Stelle 8 der Wand 3 bei der ersten Messung mit der Stelle 8' der Wand 3 bei der zweiten Messung identisch ist. Dies kann z.B. erreicht werden, wenn die beiden Messpunkte sich genau gegenüber liegen und der Behälter zwischen den beiden Messungen um 180° um seine Längsachse gedreht wird. Dazu kann zusätzlich zu dem Förderband 13 eine Vorrichtung zum Drehen des Behälters 1 vorgesehen sein.

Alternativ oder zusätzlich ist es auch möglich, beide Messungen nicht nur bei unterschiedlichen Frequenzen, sondern auch jeweils an mehreren Stellen der Wand 3 durchzuführen, um statistische Fehler zu reduzieren. Dazu kann der Behälter z.B. um 360° um seine Längsachse rotiert werden und dabei die erste und die zweite Messung wiederholt durchgeführt werden. So können auch Inhomogenitäten der Flasche erkannt und berücksichtigt werden.

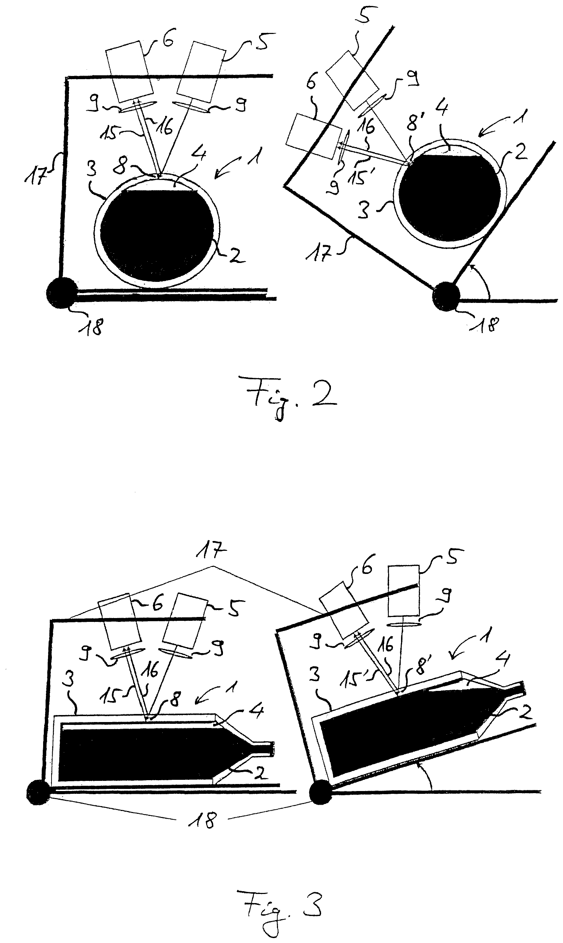

In den Figuren 2 und 3 sind zwei vergleichbare Anordnungen gezeigt. Wiederkehrende Merkmale sind hier wieder mit den gleichen Bezugszeichen versehen. Nicht dargestellt, aber in gleicher Weise wie bei dem vorherigen Ausführungsbeispiel vorgesehen sind eine Lichtquelle zum Aktivieren des Terahertzsenders 5 und des Terahertzempfängers 6, die wie zuvor beschrieben optisch mit dem Terahertzsender 5 und dem Terahertzsempfänger 6 gekoppelt ist, und eine entsprechend programmierte Auswerteeinheit. Unterschiede zum vorherigen Ausführungsbeispiel ergeben sich lediglich dadurch, dass hier jeweils nur ein Terahertzsender 5 und ein Terahertzsender 6 vorhanden sind, die sowohl für die erste als auch für die zweite Messung verwendet werden. Vorgesehen ist jeweils eine schwenkbare Haltevorrichtung 17 für den Behälter 1, mit der der Behälter 2 relativ zu dem Terahertzsender 5 und dem Terahertzempfänger 6 fixiert wird und zusammen mit diesen um eine Achse 18 gedreht bzw. gekippt werden kann.

Die jeweilige Anordnung ist in den Figuren 2 und 3 jeweils zweimal nebeneinander dargestellt, und zwar links in einer ersten Stellung, in der die erste Messung durchgeführt wird, und rechts in einer zweiten Stellung, in der die zweite Messung durchgeführt wird. Die Stelle 8' der Wand 3, an der die zweite Messung durchgeführt wird, ist hier mit der Stelle 8 identisch, an der die erste Messung durchgeführt wird, wobei dort bei der ersten Messung das Gas 4 bzw. die das Gas 4 enthaltende Gasblase und bei der zweiten Messung die zu bestimmende Flüssigkeit 2 die Wand 3 an einer inneren Oberfläche der Wand 3 berührt.

Ansonsten entsprechen die mit den Anordnungen aus den Figuren 2 und 3 durchgeführten Verfahren dem zuvor beschriebenen Verfahren mit der einzigen Einschränkung, dass die zwei Messungen, die auch hier jeweils für mehrere Frequenzen durchgeführt werden, notwendigerweise nacheinander durchgeführt werden, weil zwischen diesen Messungen die Haltevorrichtung 17 verschwenkt werden muss, um den Behälter 1 zu drehen bzw. zu kippen.

Hier ergeben sich in jedem Fall absolut identische Messorte für die zwei Messungen, womit die erste Messung eine perfekte Referenzmessung wird. Alle typischen Störeffekte an Flaschen, wie Strukturierungen, Etiketten oder Verschmutzungen, beeinflussen beide Messungen dann exakt in gleicher Weise und können so leicht und genau eliminiert werden, so dass sie die Genauigkeit des Verfahrens nicht beeinträchtigen.

Mit dem vorgeschlagenen Verfahren lässt sich der Brechungsindex der Flüssigkeit 2 und damit die Flüssigkeit 2 sehr gut unter Verwendung von THz-Strahlung analysieren, und zwar ggf. trotz ihrer Undurchlässigkeit für THz-Strahlung. In der Regel wird der an der jeweiligen Grenzfläche reflektierte Anteil der THz-Strahlung sauber detektierbar sein, weil der Behälter 1 - in den meisten Fällen eine normale Flasche - innen typischerweise eine sehr glatte Oberfläche haben wird.

Bei einer Weiterentwicklung des hier anhand der Figuren 2 und 3 beschriebenen Verfahrens wird die zweite Messung zuerst ausgeführt wird und der Behälter 1 anschließend in eine für die erste Messung geeignete Stellung bewegt, wonach mehrere weitere Messungen durchgeführt werden, die in definiertem zeitlichem Abstand aufeinander folgen und bei denen die THz-Strahlung auf die selbe Stelle 8 der Wand 1 gerichtet wird. Dann kann aus Messergebnissen der weiteren Messungen eine Geschwindigkeit einer Benetzungsänderung an der genannten Stelle 8 der Wand 1 ermittelt werden.

**Patentansprüche**

1. Verfahren zum Bestimmen einer Substanz unter Verwendung von THz-Strahlung, bei dem eine erste und eine zweite Messung durchgeführt werden, wobei die THz-Strahlung in Richtung der Substanz ausgestrahlt wird und ein aus Richtung der Substanz kommender Anteil (15, 15') der THz-Strahlung detektiert wird, wobei die Substanz eine Flüssigkeit (2) ist und sich in einem verschlossenen Behälter (1) befindet, der zusätzlich ein Gas (4) enthält, wobei eine Wand (3) des Behälters (1) für THz-Strahlung durchlässig ist, wobei die THz-Strahlung bei der ersten Messung auf eine Stelle (8) der Wand (3) gerichtet wird, an der das Gas (4) oder eine das Gas (4) enthaltende Blase die Wand (3) berührt, während die THz-Strahlung bei der zweiten Messung auf eine Stelle (8') der Wand (3) gerichtet wird, an der die Flüssigkeit (2) die Wand (3) berührt,
**dadurch gekennzeichnet,**
**dass** der detektierte Anteil (15, 15') der THz-Strahlung bei der ersten Messung an einer Grenzfläche zwischen der Wand (3) und dem Gas (4) oder der Blase reflektiert wird und der detektierte Anteil (15, 15') der THz-Strahlung bei der zweiten Messung zum Messen von Eigenschaften der Flüssigkeit (2) an einer Grenzfläche zwischen der Wand (3) und der Flüssigkeit (2) reflektiert wird, wobei die erste Messung als Referenzmessung für ein Messergebnis der zweiten Messung dient, wobei eine bei der ersten Messung gemessene Strahlungsintensität des an der Grenzfläche zum Gas oder zur Blase reflektierten Anteils als Referenzwert verwendet wird und ein Brechungsindex der Flüssigkeit (2) abhängig von einem Verhältnis von einer bei der zweiten Messung gemessenen Strahlungsintensität des an der Grenzfläche zur Flüssigkeit (2) reflektierten Anteils und dem Referenzwert bestimmt wird.

2. Verfahren nach Anspruch 1, **dadurch gekennzeichnet, dass** die Stelle (8') der Wand (3), auf die die THz-Strahlung bei der zweiten Messung gerichtet wird, mit der Stelle (8) der Wand (3) identisch ist, auf die die THz-Strahlung bei der ersten Messung gerichtet wird, wobei der Behälter (1) so bewegt wird, dass bei der ersten Messung das Gas (4) oder die Blase und bei der zweiten Messung die Flüssigkeit (2) an dieser Stelle (8, 8') die Wand (3) berührt.

3. Verfahren nach Anspruch 2, **dadurch gekennzeichnet, dass** die zweite Messung zuerst ausgeführt wird und der Behälter (1) anschließend in eine für die erste Messung geeignete Stellung bewegt wird, wonach mehrere weitere Messungen durchgeführt werden, die in definiertem zeitlichem Abstand aufeinander folgen und bei denen die THz-Strahlung auf die selbe Stelle (8, 8') der Wand (1) gerichtet wird, wobei aus Messergebnissen der weiteren Messungen eine Geschwindigkeit einer Benetzungsänderung an der genannten Stelle (8, 8') der Wand (1) ermittelt wird.

4. Verfahren nach einem der Ansprüche 1 bis 3, **dadurch gekennzeichnet, dass** mit der ersten Messung und/oder der zweiten Messung ein Brechungsindex eines die Wand (3) bildenden Materials bestimmt wird und dass der Brechungsindex der Flüssigkeit (2) bestimmt wird, indem ein Ergebnis der zweiten Messung in Abhängigkeit von dem so bestimmten Brechungsindex des die Wand (3) bildenden Materials ausgewertet wird.

5. Verfahren nach einem der vorhergehenden Ansprüche, **dadurch gekennzeichnet, dass** bei der ersten Messung und/oder bei der zweiten Messung zusätzlich zu dem genannten Anteil (15, 15') ein an einer äußeren Oberfläche des Behälters (1) reflektierter Strahlungsanteil (16) detektiert wird und dass eine Laufzeitdifferenz und/oder ein Intensitätsunterschied zwischen dem an der jeweiligen Grenzfläche zwischen der Wand (3) und dem Gas (4) oder der Flüssigkeit (2) reflektierten Anteil (15, 15') und dem an der äußeren Oberfläche reflektierten Strahlungsanteil (16) bestimmt wird.

6. Verfahren nach Anspruch 5, **dadurch gekennzeichnet, dass** aus der Laufzeitdifferenz eine optische Dicke der Wand (3) ermittelt und aus dem Intensitätsunterschied ein Maß für ein Absorptionsverhalten eines die Wand (3) bildenden Materials bestimmt wird.

7. Verfahren nach einem der vorhergehenden Ansprüche, **dadurch gekennzeichnet, dass** die erste und/oder die zweite Messung jeweils mehrmals an verschiedenen Stellen (8, 8') der Wand (3) und/oder bei verschiedenen Frequenzen der THz-Strahlung durchgeführt werden.

8. Verfahren nach einem der vorhergehenden Ansprüche, **dadurch gekennzeichnet, dass** die erste Messung und die zweite Messung jeweils an mehreren Stellen (8, 8') der Wand (3) durchgeführt werden, wobei durch Differenz- oder Verhältnisbildung zwischen Ergebnissen der ersten und der zweiten Messung ein Bild erzeugt wird.

9. Anordnung zum Bestimmen einer in einem verschlossenen Behälter (1) befindlichen Flüssigkeit (2), umfassend mindestens einen Terahertzsender (5, 5') zum Erzeugen von THz-Strahlung, mindestens einen Terahertzempfänger (6, 6') zum Detektieren der THz-Strahlung sowie eine mit dem mindestens einen Terahertzempfänger (6, 6') verbundene Auswerteeinheit (14) zum Auswerten von Ausgangssignalen des Terahertzempfängers (6, 6'), **dadurch gekennzeichnet, dass** der Terahertzsender (5, 5') und der Terahertzempfänger (6, 6') relativ zueinander so angeordnet sind, dass der Terahertzempfänger (6, 6') geeignet ist, die mit dem Terahertzsender (5, 5') erzeugte THz-Strahlung nach einer Reflexion an einer oder mehreren definierten Stellen (8, 8') einer inneren Oberfläche einer Wand (3) des Behälters (1) zu detektieren, und wobei die Auswerteeinheit (14) programmtechnisch eingerichtet ist, die Ausgangssignale für eine erste Messung, bei der ein an einer Grenzfläche zwischen der Wand (3) und einem Gas (4) reflektierter Anteil (15) der THz-Strahlung detektiert wird, und eine zweite Messung, bei der ein an einer Grenzfläche zwischen der Wand (3) und der Flüssigkeit (2) reflektierter Anteil (15') der THz-Strahlung detektiert wird, auszuwerten und dabei

   - aus den Ausgangssignalen für die erste Messung einen Referenzwert für eine Intensität der detektierten THz-Strahlung abzuleiten und
   - die Ausgangssignale für die zweite Messung in Abhängigkeit von dem Referenzwert auszuwerten und dadurch einen Brechungsindex der in dem Behälter (1) befindlichen Flüssigkeit (2) abzuleiten und/oder die Flüssigkeit einer Flüssigkeits-Klasse zuzuordnen.

10. Anordnung nach Anspruch 9, **dadurch gekennzeichnet, dass** sie eine Haltevorrichtung (17) für den Behälter (1), den Terahertzsender (5) und den Terahertzempfänger (6) aufweist, um diese relativ zueinander zu fixieren, wobei der Behälter (1), der Terahertzsender (5) und der Terahertzempfänger (6) mittels der Haltevorrichtung (17) gemeinsam so zwischen einer ersten Stellung für die erste Messung und einer zweiten Stellung für die zweite Messung drehbar oder schwenkbar sind, dass ein für beide Messungen identischen Messpunkt an der inneren Oberfläche der Wand (3) in der ersten Stellung von einem zusätzlich zu der Flüssigkeit (2) im Behälter (1) befindliches Gas oder von einer dieses Gas enthaltende Blase berührt wird und in der zweiten Stellung von der Flüssigkeit (2) bedeckt ist.

11. Anordnung nach Anspruch 9, **dadurch gekennzeichnet, dass** sie zwei Paare von jeweils einem Terahertzsender (5, 5') und jeweils einem Terahertzempfänger (6, 6') aufweist, von denen eines höher angeordnet ist als das andere, wobei das höher angeordnete Paar für die erste Messung an einem zusätzlich zu der Flüssigkeit (2) im Behälter (1) befindlichen Gas und das andere Paar für die zweite Messung an der Flüssigkeit (2) vorgesehen ist.

12. Anordnung nach einem der Ansprüche 9 bis 11, **dadurch gekennzeichnet, dass** die Auswerteeinheit (14) eingerichtet ist, aus den Ausgangssignalen jeweils eine Intensität eines an einer äußeren Oberfläche der Wand (3) des Behälters (1) reflektierten Anteils und eine Intensität eines an der inneren Oberfläche der Wand (3) des Behälters (1) reflektierten Anteils (15, 15') der THz-Strahlung sowie eine Laufzeitdifferenz zwischen diesen beiden Anteilen abzuleiten.

13. Anordnung nach Anspruch 12, **dadurch gekennzeichnet, dass** die Auswerteeinheit (14) eingerichtet ist,

   - aus der Laufzeitdifferenz eine optische Dicke der Wand (3) des Behälters (1) abzuleiten,
   - aus den Intensitäten des an der äußeren Oberfläche der Wand (3) reflektierten Anteils und des an der inneren Oberfläche der Wand (3) reflektierten Anteils (15, 15') in Abhängigkeit von der optischen Dicke ein Maß für ein Absorptionsverhalten des Wandmaterials abzuleiten,
   - das Wandmaterial in Abhängigkeit von diesem Maß als einem bestimmten Stoff entsprechend oder einer bestimmten Stoffklasse zugehörig zu identifizieren,
   - den Brechungsindex des Wandmaterials zu bestimmen als einem Wert entsprechend, der für diesen Stoff oder diese Stoffklasse in einem Speicher hinterlegt ist und
   - den Brechungsindex der Flüssigkeit (2) durch Auswerten eines Ergebnisses der zweiten Messung in Abhängigkeit von dem so bestimmten Brechungsindex des Wandmaterials zu bestimmen.

**14.** Anordnung nach einem der Ansprüche 9 bis 13, **dadurch gekennzeichnet, dass** die Auswerteeinheit (14) eine Vorrichtung zum Ansteuern des Terahertzsenders (5, 5') aufweist, die eingerichtet ist, den Terahertzsender (5, 5') so anzusteuern, dass er die THz-Strahlung sukzessive oder gleichzeitig mit verschiedenen Frequenzen erzeugt, wobei die Auswerteeinheit (14) eingerichtet ist, durch Auswertung der Ausgangssignale bei der jeweiligen Frequenz zumindest eine der beiden Messungen für jede dieser Frequenzen durchzuführen.

**Claims**

**1.** A method for determining a substance, using the application of THz radiation, wherein a first and a second measurement are carried out, wherein the THz radiation is emitted in the direction of the substance and a part (15, 15') of the THz radiation coming from the direction of the substance is detected, wherein the substance is a liquid (2) and is located in a closed container (1) which additionally contains a gas (4), wherein a wall (3) of the container (1) is transparent to THz radiation, wherein during the first measurement, the THz radiation is directed onto a location (8) of the wall (3) at which the gas (4) or a bubble containing the gas (4) contacts the wall (3), whereas during the second measurement, the Thz radiation is directed onto a location (8') of the wall (3) at which the liquid (2) contacts the wall (3),

> **characterised in that**
> during the first measurement, the detected part (15, 15') of the THz radiation is reflected at a boundary surface between the wall (3) and the gas (4) or the bubble, and during the second measurement, the detected part (15, 15') of the THz radiation is reflected at a boundary surface between the wall (3) and the liquid (2) in order to measure the characteristics of the liquid (2), wherein the first measurement serves as a reference measurement for a measurement result of the second measurement, wherein a radiation intensity of the part reflected at the boundary surface to the gas or to the bubble, measured during the first measurement, is used as a reference value and a refractive index of the liquid (2) is determined depending on a ratio of a radiation intensity of the part reflected at the boundary surface to the liquid (2) during the second measurement to the reference value.

**2.** The method according to claim 1, **characterised in that** the location (8') of the wall (3), onto which the THz radiation is directed with the second measurement, is identical to the location (8) of the wall (3), onto which the THz radiation is directed with the first measurement, wherein the container (1) is moved such that during the first measurement, the gas (4) or the bubble, and during the second measurement, the liquid (2) contacts the wall (3) at said location (8, 8').

**3.** The method according to claim 2, **characterised in that** the second measurement is carried out first and the container (1) is subsequently moved into a position suitable for the first measurement, whereupon several further measurements are carried out, which are successive in a defined temporal interval, and during which the THz radiation is directed onto the same location (8, 8') of the wall (1), wherein a speed of the wetting change at said location (8, 8') of the wall (1) is determined from the measurement results of the further measurements.

**4.** The method according to any one of the claims 1 to 3, **characterised in that** a refractive index of a material forming the wall (3) is determined with the first measurement and/or the second measurement, and that the refractive index of the liquid (2) is determined by way of a result of the second measurement being evaluated in dependence on the thus determined refractive index of the material forming the wall (3).

**5.** The method according to one of the preceding claims, **characterised in that** additionally to the mentioned part (15, 15'), a radiation part (16) reflected at an outer surface of the container (1) is detected with the first measurement and/or with the second measurement, and that a travel time difference and/or intensity difference between the part (15, 15') reflected at the respective boundary surface between the wall (3) and the gas (4) or the liquid (2) and the radiation part (16) reflected at the outer surface is determined.

**6.** The method according to claim 5, **characterised in that** an optical thickness of the wall (3) is determined from the travel time difference and a measure of an absorption behaviour of a material forming the wall (3) is determined from the intensity difference.

**7.** The method according to one of the preceding claims, **characterised in that** the first and/or the second measurement in each case are carried out several times at different locations (8, 8') of the wall (3) and/or at different frequencies of the THz radiation.

**8.** The method according to one of the preceding claims, **characterised in that** the first measurement and the second measurement in each case are carried out at different locations (8, 8') of the wall (3), wherein an image is generated by way of a difference or ratio between results of the first and second meas-

**9.** An arrangement for determining a liquid (2) which is located in a closed container (1), the arrangement comprising at least one terahertz emitter (5, 5') for generating THz radiation, at least one terahertz receiver (6, 6') for detecting the THz radiation, as well as an evaluation unit (14) connected to the at least one terahertz receiver (6, 6'), for evaluating output signals of the terahertz receiver (6, 6'),

**characterised in that** the terahertz emitter (5, 5') and the terahertz receiver (6, 6') are arranged relative to one another such that the terahertz receiver (6, 6') is suitable for detecting the THz radiation generated by the terahertz emitter (5, 5') after a reflection at one or more defined locations (8, 8') of an inner surface of a wall (3) of the container (1), and wherein the evaluation unit (14) with regard to programming technology is configured to evaluate the output signals for a first measurement, wherein a part (15) of the THz radiation reflected at a boundary surface between the wall (3) and a gas (4) is detected, and for a second measurement, wherein are part (15') of the THz radiation reflected at a boundary surface between the wall (3) and the liquid (2) is detected, and, in doing so,

- to derive a reference value for an intensity of the detected THz radiation from the output signals for the first measurement and
- to evaluate the output signals for the second measurement in dependence on the reference value and thereby to derive a refractive index of the liquid (2) located in the container (1) and/or to assign the liquid to a liquid class.

**10.** The arrangement according to claim 9, **characterised in that** it comprises a holding device (17) for the container (1), for the terahertz emitter (5) and for the terahertz receiver (6), in order to fix these relative to one another, wherein the container (1), the terahertz emitter (5) and the terahertz receiver (6), by way of the holding device (17) are jointly rotatable or pivotable between a first position for the first measurement and a second position for the second measurement such that a measurement point on the inner surface of the wall (3) and which is identical for both measurements, in the first position is contacted by a gas located in the container (1) additionally to the liquid (2) or by a bubble containing this gas, and in the second position is covered by the liquid (2).

**11.** The arrangement according to claim 9, **characterised in that** it comprises two pairs of in each case a terahertz emitter (5, 5') and in each case a terahertz receiver (6, 6'), of which one is arranged higher than the other, wherein the higher arranged pair is provided for the first measurement on a gas located in the container (1) additionally to the liquid (2), and the other pair for the second measurement on the liquid (2).

**12.** The arrangement according to one of the claims 9 to 11, **characterised in that** the evaluation unit (14) is configured to derive in each case, from the output signals, an intensity of a part of the THz radiation reflected at an outer surface of the wall (3) of the container (1) and an intensity of a part (15, 15') of the THz radiation which is reflected at the inner surface of the wall (3) of the container (1), as well as a travel time difference between these two parts.

**13.** The arrangement according to claim 12, **characterised in that** the evaluation unit (14) is configured

- to derive an optical thickness of the wall (3) of the container (1) from the travel time difference,
- to derive a measure for an absorption behaviour of the wall material from the intensities of the part reflected on the outer surface of the wall (3) and of the part (15, 15') reflected on the inner surface of the wall (3), in dependence on the optical thickness,
- to identify the wall material in dependence on this measure, as corresponding to a certain substance or belonging to a certain substance class,
- to determine the refractive index of the wall material, as corresponding to a value which is stored in a memory for this substance or for this substance class and
- to determine the refractive index of the liquid (2) by way of evaluating a result of the second measurement in dependence on the thus determined refractive index of the wall material.

**14.** The arrangement according to one of the claims 9 to 13, **characterised in that** the evaluation unit (14) comprises a device for controlling the terahertz emitter (5, 5'), the device configured to activate the terahertz emitter (5, 5') such that the terahertz emitter generates the THz radiation successively or simultaneously at different frequencies, wherein the evaluation unit (14) is configured to carry out at least one of the two measurements for each of these frequencies by way of evaluation of the output signals at the respective frequency.

**Revendications**

**1.** Procédé de détermination d'une substance moyennant l'emploi d'un rayonnement dans le domaine des fréquences térahertz, chez lequel une première et une deuxième mesures sont effectuées, où le rayonnement térahertz est émis en direction de la substance et une partie (15, 15') du rayonnement térahertz provenant de la direction de la substance est détectée, où la substance est un liquide (2) et se trouve dans un récipient (1) fermé, qui contient en plus un gaz (4), où une paroi (3) du récipient (1) laisse passer le rayonnement térahertz, où le rayonnement térahertz, lors de la première mesure, est dirigé vers un endroit (8) de la paroi (3) au niveau duquel le gaz (4) ou une bulle contenant le gaz (4) touche la paroi (3), tandis que le rayonnement térahertz, lors de la deuxième mesure, est dirigé vers un endroit (8') de la paroi (3) au niveau duquel le liquide (2) touche la paroi (3),

> **caractérisé en ce que** la partie (15, 15') du rayonnement térahertz détectée lors de la première mesure est réfléchie sur une surface de séparation entre la paroi (3) et le gaz (4) ou la bulle et la partie (15, 15') du rayonnement térahertz détectée lors de la deuxième mesure est réfléchie sur une surface de séparation entre la paroi (3) et le liquide (2) pour la mesure de propriétés du liquide (2), où la première mesure sert de mesure de référence pour un résultat de mesure de la deuxième mesure, où une intensité de rayonnement mesurée lors de la première mesure de la partie réfléchie à la surface de séparation vers le gaz ou vers la bulle mesurée est employée en tant que valeur de référence et un indice de réfraction du liquide (2) est déterminé de manière dépendante d'un rapport d'une intensité de rayonnement mesurée lors de la deuxième mesure de la partie réfléchie au niveau de la surface de séparation vers le liquide (2) à la valeur de référence.

2. Procédé selon la revendication 1, **caractérisé en ce que** l'endroit (8') de la paroi (3), sur lequel est dirigé le rayonnement térahertz lors de la deuxième mesure est identique à l'endroit (8) de la paroi (3) sur lequel le rayonnement térahertz est dirigé lors de la première mesure, où le récipient (1) est déplacé de sorte que, lors de la première mesure, le gaz (4) ou la bulle touchent la paroi (3), et, lors de la deuxième mesure, le liquide (2) touche la paroi à cet endroit (8, 8').

3. Procédé selon la revendication 2, **caractérisé en ce que** la deuxième mesure est effectuée en premier lieu et le récipient (1) est ensuite déplacé dans une position appropriée pour la première mesure, après quoi plusieurs autres mesures sont effectuées, qui se suivent à des intervalles de temps définis et dans lesquels le rayonnement térahertz est dirigé vers le même endroit (8, 8') de la paroi (1), où on détermine à partir des résultats des mesures des autres mesures une vitesse de modification de mouillabilité au niveau dudit endroit (8, 8') de la paroi (1).

4. Procédé selon l'une des revendications 1 à 3, **caractérisé en ce qu'**avec la première mesure et/ou la deuxième mesure, on détermine un indice de réfraction d'un matériau formant la paroi (3) et que l'indice de réfraction du liquide (2) est déterminé **en ce qu'**un résultat de la deuxième mesure est évalué en fonction de l'indice de réfraction du matériau formant la paroi (3) ainsi déterminé.

5. Procédé selon l'une des revendications précédentes, **caractérisé en ce que**, lors de la première mesure et/ou lors de la deuxième mesure, en plus de ladite partie (15, 15') détectée, une partie de rayonnement (16) réfléchie au niveau d'une surface extérieure du récipient (1) est détectée et qu'une différence de temps de parcours et/ou une différence d'intensité est déterminée entre la partie (15, 15') réfléchie au niveau de la surface de séparation respective entre la paroi (3) et le gaz (4) ou le liquide (2) et la partie de rayonnement (16) réfléchie au niveau de la surface extérieure.

6. Procédé selon la revendication 5, **caractérisé en ce qu'**une épaisseur optique de la paroi (3) est déterminée à partir de la différence de temps de parcours et qu'une mesure du comportement d'absorption d'un matériau formant la paroi (3) est déterminée à partir de la différence d'intensité.

7. Procédé selon l'une des revendications précédentes, **caractérisé en ce que** la première mesure et/ou la deuxième mesure sont effectuées respectivement plusieurs fois à divers endroits (8, 8') de la paroi (3) et/ou pour diverses fréquences du rayonnement térahertz.

8. Procédé selon l'une des revendications précédentes, **caractérisé en ce que** la première mesure et la deuxième mesure sont effectuées respectivement au niveau de plusieurs endroits (8, 8') de la paroi (3), où une image est créée par la création d'une différence ou la formation d'une relation entre des résultats de la première et de la deuxième mesure.

9. Ensemble permettant de déterminer un liquide (2) se trouvant dans un récipient (1) fermé, comprenant au moins un émetteur térahertz (5,5') pour générer un rayonnement térahertz, au moins un récepteur térahertz (6, 6') pour détecter le rayonnement térahertz, ainsi qu'une unité d'exploitation (14) reliée à l'au moins un récepteur térahertz (6, 6') pour évaluer des signaux térahertz du récepteur térahertz (6, 6'),

> **caractérisé en ce que** l'émetteur térahertz (5, 5') et le récepteur térahertz (6, 6') sont disposés relativement l'un par rapport à l'autre de sorte que le récepteur térahertz (6, 6') est approprié pour détecter le rayonnement térahertz créé avec l'émetteur térahertz (5, 5') après une réflexion au niveau d'un ou de plusieurs endroits (8, 8') définis d'une surface intérieure d'une paroi (3) du récipient (1),

et dans lequel l'unité d'exploitation (14) est conçue, par des moyens techniques programmés, pour évaluer les signaux de sortie pour une première mesure, dans laquelle une partie (15) rayonnement térahertz réfléchie sur une surface de séparation entre la paroi (3) et le gaz (4) est détectée, et pour une deuxième mesure, dans laquelle une partie (15') du rayonnement térahertz réfléchie sur une surface de séparation entre la paroi (3) et le liquide (2) est détectée, et ainsi

- dériver une valeur de référence pour une intensité du rayonnement térahertz détecté à partir des signaux de sortie pour la première mesure, et

- évaluer les signaux de sortie pour la deuxième mesure en fonction de la valeur de référence et en dériver un indice de réfraction du liquide (2) se trouvant dans le récipient (1) et/ou classer le liquide dans une classe de liquides.

10. Ensemble selon la revendication 9, **caractérisé en ce qu'**il présente un dispositif de support (17) pour le récipient (1), l'émetteur térahertz (5) et le récepteur térahertz (6), afin de fixer ceux-ci relativement les uns par rapport aux autres, où le récipient (1), l'émetteur térahertz (5) et le récepteur térahertz (6) peuvent être tournés ou pivotés ensemble au moyen du dispositif de support (17) entre une première position pour la première mesure et une deuxième position pour la deuxième mesure, de sorte qu'un point de mesure identique pour les deux mesures est touché sur la surface intérieure de la paroi (3) dans la première position par un gaz se situant dans le récipient (1) en plus du liquide (2) ou par une bulle contenant ce gaz, et est recouvert par le liquide (2) dans la deuxième position.

11. Ensemble selon la revendication 9, **caractérisé en ce qu'**il présente deux paires d'un émetteur térahertz (5, 5') respectif et d'un récepteur térahertz (6, 6') respectif, parmi lesquelles l'une est disposé plus haut que l'autre, où la paire disposée le plus haut est prévue pour la première mesure sur un gaz se trouvant dans le récipient (1) en plus du liquide (2) et l'autre paire est prévue pour la deuxième mesure sur le liquide (2).

12. Ensemble selon l'une des revendications 9 à 11, **caractérisé en ce que** l'unité d'exploitation (14) est conçue pour dériver, à partir des signaux de sortie, respectivement une intensité d'une partie réfléchie sur une surface extérieure de la paroi (3) du récipient (1) et une intensité d'une partie (15, 15') du rayonnement térahertz réfléchie sur la surface intérieure de la paroi (3) du récipient (1) ainsi que pour dériver une différence de temps de parcours entre ces deux parties.

13. Ensemble selon la revendication 12, **caractérisé en ce que** l'unité d'exploitation (14) est conçue

- pour déduire une épaisseur optique de la paroi (3) du récipient (1) à partir de la différence de temps de parcours,

- pour déduire, à partie des intensités de la partie réfléchie sur la surface extérieure de la paroi (3) et de la partie (15, 15') réfléchie sur la surface intérieure de la paroi (3), en fonction de l'épaisseur optique, une mesure de comportement d'absorption du matériau de paroi,

- pour identifier le matériau de paroi en fonction de cette mesure comme correspondant à une substance déterminée ou faisant partie d'une classe de substances déterminée,

- pour déterminer l'indice de réfraction du matériau de paroi comme correspondant à une valeur qui est consignée dans une mémoire pour cette substance ou cette classe de substances, et

- pour déterminer l'indice de réfraction du liquide (2) par l'évaluation d'un résultat de la deuxième mesure en fonction de l'indice de réfraction du matériau de paroi ainsi déterminé.

14. Ensemble selon l'une des revendications 9 à 13, **caractérisé en ce que** l'unité d'exploitation (14) présente un dispositif pour le démarrage de l'émetteur térahertz (5, 5'), qui est conçu pour démarrer l'émetteur térahertz (5, 5') de telle manière qu'il génère le rayonnement térahertz de manière successive ou simultanée avec diverses fréquences, où l'unité d'exploitation (14) est conçue, par l'évaluation des signaux de sortie à la fréquence respective, pour exécuter au moins une des deux mesures pour chacune de ces fréquences.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 102009051692 B3

*   WO 0106915 A1

**In der Beschreibung aufgeführte Nicht-Patentliteratur**

*   **L. KRUMBHOLZ et al.** Handheld Terahertz Spectrometer for the Detection of Liquid Explosives. *Proc. of SPIE,* 2009, vol. 7485, 748504
*   **S. HUNSCHE et al.** New Dimensions in T-Ray Imaging. *IEICE Transactions on Electronics,* Februar 2009, vol. E81-C (2), 269 ff

*   **D. M. MITTLEMAN et al.** T-Ray Imaging. *IEEE Journal of Selected Topics in Quantum Electronics,* September 1996, vol. 2 (3), 679 ff